# FASCICULE DE BREVET EUROPEEN

(11) **EP 1 491 719 B1**
(45) Date de publication et mention de la délivrance du brevet: **02.04.2008**
(21) Numéro de dépôt: 04356104.2
(22) Date de dépôt: 18.06.2004
(51) Int. Cl.: E21D 20/00, E21B 7/02

(54) **Véhicule porteur pour machine de foration ou de boulonnage**
Trägerfahrzeug für Bohr- oder Verbolzungsmaschine
Carrier vehicle for a drilling or bolting machine

(30) Priorité: 26.06.2003 FR 0307722
(43) Date de publication de la demande: 29.12.2004
(73) Titulaire: Sandvik Mining and Construction Lyon SAS, 69330 Meyzieu (FR)
(72) Inventeur: Barthomeuf, Jean-Claude, 69480 Lucenay (FR); Leon, Franck, 69008 Lyon (FR); Comorge, Alain, 69740 Genas (FR); Miralles, Alexandre, 38200 Vienne (FR)
(74) Mandataire: Bratel, Gérard

(56) Documents cités:
- DE-A- 2 855 486
- GB-A- 1 583 574
- US-A- 3 851 481
- US-A- 3 917 005
- US-A- 5 125 460

## Description

La présente invention concerne, de façon générale, les machines de foration ou de boulonnage, destinées à l'exécution de travaux souterrains, en particulier dans les exploitations minières. Cette invention se rapporte plus particulièrement à la conception de la partie "véhicule porteur" de telles machines, cette partie supportant les équipements de travail, en particulier les équipements de foration ou de boulonnage.

Les machines traditionnelles de foration ou de boulonnage comportent, habituellement, une partie "véhicule porteur" à châssis rigide ou articulé, à quatre roues, partie qui porte à l'avant un ou deux bras de foration ou de boulonnage, dont l'orientation de base est parallèle au sens de déplacement de la machine. A titre d'exemples, il est ici fait référence à la demande de brevet européen EP 0 890 704 A au nom du Demandeur, relative à une machine à châssis articulé, et au brevet US 3917005 qui décrit un véhicule à châssis rigide. On connaît aussi, dans ce domaine, des véhicules porteurs à chenilles - voir par exemple le brevet GB 1583574.

Ces machines existantes sont, habituellement, relativement encombrantes notamment en hauteur, ce qui leur interdit une utilisation dans des galeries de mines de faible hauteur. De plus, la disposition de leurs bras de foration ou de boulonnage ne permet en général qu'une utilisation de ces machines avec leur axe longitudinal de déplacement perpendiculaire au front de taille.

Un autre problème rencontré dans l'utilisation de telles machines de foration ou de boulonnage est l'irrégularité du sol des galeries de mines, sur lequel le véhicule porteur doit ses déplacer, et doit aussi être immobilisé pour les opérations de foration ou de boulonnage. Le sol d'une galerie de mine présente habituellement des dénivellations importantes, d'un point à un autre, et l'on utilise habituellement des appuis ou "béquilles" prévus sur ces véhicules porteurs, en plus de leurs roues, pour les stabiliser dans une position arrêtée de travail - voir par exemple le brevet US précité 3917005, ou le brevet US 3851481 qui sert de base au préambule de la revendication 1, ou encore le document allemand DE 2855486 A.

La présente invention vise à éliminer ces inconvénients ou limitations d'utilisation des machines actuelles, en fournissant un véhicule porteur particulièrement compact, conçu pour une utilisation dans des galeries de faible hauteur, et autorisant un mode de travail différent et avantageux, tout en s'adaptant aux irrégularités du sol.

A cet effet, l'invention a pour objet un véhicule porteur pour machine de foration ou de boulonnage, lequel véhicule comporte un châssis rigide et quatre roues toutes motrices, soit deux roues motrices situées du côté droit du châssis du véhicule et deux autres roues motrices situées du côté gauche de ce châssis, ces quatre roues motrices étant à suspension indépendante, et comportant chacune des moyens motorisés d'entraînement en rotation, le véhicule porteur étant essentiellement caractérisé par le fait que la suspension indépendante de chacune des quatre roues motrices du véhicule porteur est une suspension à hauteur commandée indépendamment par des moyens moteurs, à savoir une suspension du type parallélogramme déformable, animée par un vérin hydraulique permettant un réglage de la garde au sol pour chaque roue motrice, ledit châssis recevant, à l'avant et/ou à l'arrière, des équipements de travail, notamment des équipements de foration ou de boulonnage.

Avantageusement, les quatre roues motrices du véhicule porteur sont des roues non orientables, et leurs moyens motorisés d'entraînement en rotation comprennent, pour les deux roues situées du côté droit du châssis, des moteurs hydrauliques respectifs alimentés par une première pompe ou un premier groupe motopompe, et pour les deux roues situées du côté gauche du châssis, des moteurs hydrauliques respectifs alimentés, indépendamment des précédents, par une seconde pompe ou un second groupe motopompe. Il s'agit, notamment, de deux groupes motopompes électriques, ou de deux pompes entraînées par un moteur commun.

Le châssis renferme encore un réservoir hydraulique, commun à l'ensemble des organes et équipements hydrauliques de déplacement et de travail de la machine de foration ou de boulonnage.

Dans une forme de réalisation de ce véhicule porteur, adaptée à la constitution d'une machine de foration, le châssis porte, à l'avant et à l'arrière, respectivement un bras de foration avant et un bras de foration arrière, chacun avec une glissière de foration, dont la position de base est horizontale et orientée perpendiculairement au sens longitudinal de déplacement du véhicule porteur sur ses roues.

Dans l'ensemble, l'on obtient ainsi une machine, notamment de foration, qui possède une configuration très compacte et de faible hauteur, en particulier inférieure à un mètre, tant pour sa partie "véhicule porteur" que pour ses équipements de foration, ce qui permet son utilisation dans des galeries de mines dont la hauteur exploitée se situe entre 1 mètre et 1,5 mètre.

En ce qui concerne la partie "véhicule porteur" proprement dite, l'invention procure les avantages suivants :
- La suspension indépendante commandée de chacune des quatre roues motrices, animée par un vérin hydraulique, permet d'adapter la hauteur de la machine aux dénivellations et irrégularités du sol, en assurant une stabilité parfaite tant dans le sens longitudinal de déplacement qu'en dévers. La garde au sol étant ainsi réglable de façon indépendante pour chaque roue, le véhicule porteur peut rouler sans difficulté sur un sol très irrégulier ; de plus, en position arrêtée de travail, ce véhicule porteur peut être stabilisé par adaptation de la hauteur de chaque roue, sans qu'il soit nécessaire de recourir à des appuis ou "béquilles" de stabilisation.
- La commande indépendante des deux roues motrices droites d'une part, et des deux roues motrices gauches d'autre part, avec de chaque côté une possibilité de marche avant, de marche arrière ou d'arrêt complet, permet d'avoir une direction par "ripage", analogue à celle d'un véhicule à chenilles, sans nécessité d'orientation des roues et avec possibilité de rotation du véhicule porteur "sur place", ce qui rend ce véhicule porteur extrêmement maniable, pour son positionnement et son déplacement.
- Le parcage de la machine devient lui aussi très facile.

Un autre aspect de l'invention, dans l'application à une machine de foration, est la présence de deux bras de foration placés respectivement à l'avant et à l'arrière du véhicule porteur, avec une position de base transversale des glissières de foration (contrairement à la conception classique avec des bras situés à l'avant seulement et dirigés dans le sens longitudinal de la partie "véhicule porteur"). Il en résulte les avantages supplémentaires suivants, compte tenu également des particularités de la partie "véhicule porteur" :
- Le déplacement du véhicule porteur s'effectue parallèlement à la face de foration, avec un temps de déplacement réduit entre deux positions d'arrêt correspondant à des trous à forer consécutivement.
- La réalisation de trous parallèles entre eux devient particulièrement aisée.
- Chaque bras de foration peut être conduit de façon séparée, sans risque d'interférence entre les deux bras.
- La visibilité en cours de foration est améliorée.

On notera aussi que l'utilisation de la machine peut être facilitée par des télécommandes et notamment des radiocommandes, ou des télécommandes à câble, d'une part pour les mouvements au sol de la partie "véhicule porteur", et d'autre part pour les positionnements et mouvements des deux bras de foration, respectivement avant et arrière, ou de tous autres équipements de travail.

L'invention sera mieux comprise à l'aide de la description qui suit, en référence au dessin schématique annexé représentant, à titre d'exemple, une forme d'exécution de ce véhicule porteur, appliqué à une machine de foration.

Figure 1 est une vue d'ensemble, en perspective, d'une machine de foration avec véhicule porteur conforme à la présente invention, les plaques supérieures du châssis de ce véhicule étant retirées ;
Figure 2 est une vue de côté du véhicule porteur objet de la présente invention, travaillant dans une galerie de mines ;
Figure 3 est une vue en plan par-dessus du véhicule porteur des figures 1 et 2 ;
Figure 4 en est une vue en coupe transversale, simplifiée et à plus grande échelle ;
Figure 5 représente, en perspective, la suspension de l'une des roues de ce véhicule porteur.

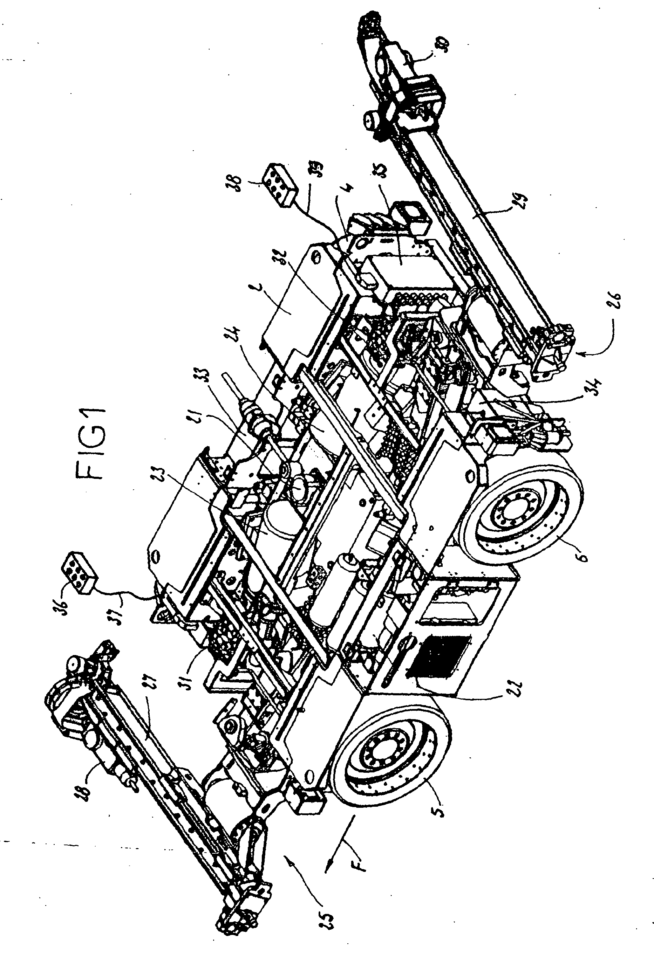

Les figures 1 à 3 représentent, dans son ensemble, un véhicule porteur qui comprend un châssis monobloc rigide 2, et quatre roues toutes motrices, soit deux premières roues motrices 3 et 4 situées sur le côté longitudinal droit du châssis 1, et deux autres roues motrices 5 et 6 situées sur le côté longitudinal gauche du châssis 2.

Le châssis 2, de forme générale parallélépipédique, possède une face supérieure 7 plane et horizontale, située à une faible hauteur, inférieure à un mètre, au-dessus du sol 8 sur lequel le véhicule porteur se déplace par ses quatre roues 3 à 6.

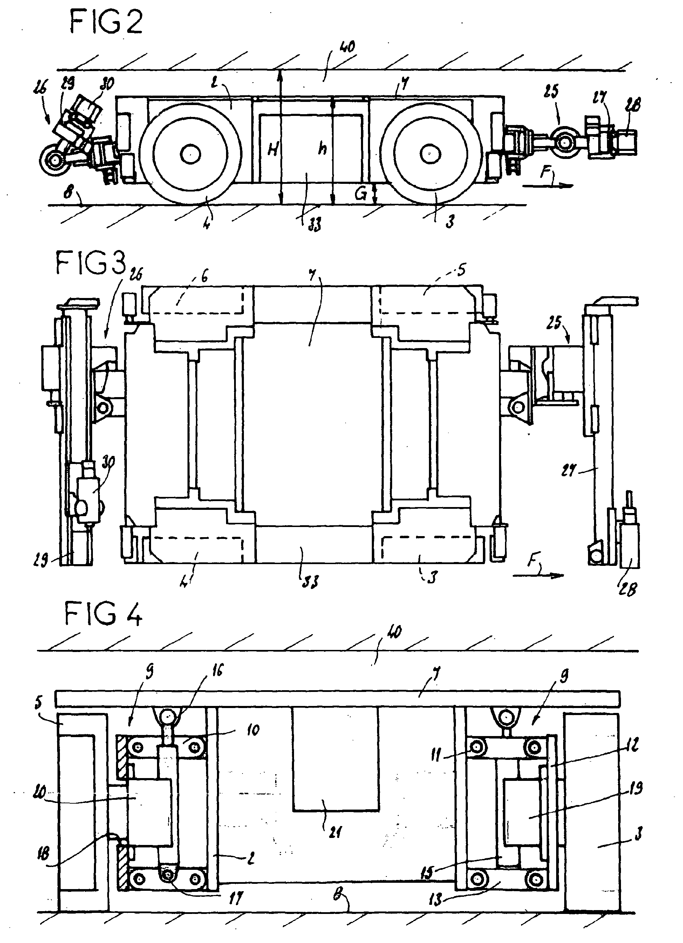

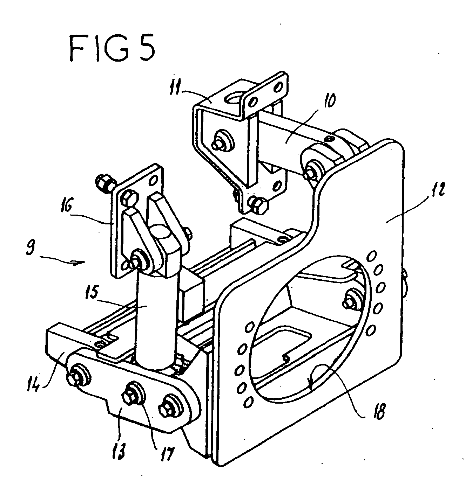

Chaque roue motrice 3 à 6 dispose d'une suspension indépendante, désignée globalement par 9, visible plus particulièrement sur les figures 4 et 5. Il s'agit d'une suspension 9 à parallélogramme, avec une première bielle 10 reliant une attache 11 à une plaque verticale 12, et une seconde bielle 13 reliant une autre attache 14 à la plaque verticale 12, les deux attaches 11 et 14 étant solidaires du châssis 2. Les deux bielles 10 et 13 sont décalées d'une part en hauteur et d'autre part dans la direction longitudinale du véhicule porteur. La suspension 9 comprend encore un vérin hydraulique 15, sensiblement vertical, qui relie une autre attache 16, solidaire du châssis 2, à un point intermédiaire 17 de la seconde bielle 13, le vérin 15 étant situé du côté opposé à la première bielle 10.

La plaque verticale 12 comporte une ouverture centrale circulaire 18, au travers de laquelle est mis en place un moteur hydraulique 19 (pour chacune des roues droites 3 et 4) ou 20 (pour chacune des roues gauches 5 et 6). Chaque moteur hydraulique 19 ou 20 est fixé sur le bord de l'ouverture 18, et la roue correspondante est directement montée sur ce moteur hydraulique 19 ou 20, devant la plaque 12.

Le système hydraulique, logé dans le châssis 2, comprend un réservoir hydraulique 21, un refroidisseur d'huile 22, un premier groupe motopompe 23 qui alimente les deux moteurs hydrauliques 19 associés respectivement aux deux roues droites 3 et 4, et un second groupe motopompe 24 qui alimente les deux moteurs hydrauliques 20 associés respectivement aux deux roues gauches 5 et 6. La figure 1 donne un exemple précis de la disposition de ces composants, tandis que la figure 4 en fournit une représentation schématisée et partielle. Dans une variante non illustrée, les deux groupes motopompes indépendants 23 et 24 sont remplacés par un ensemble composé de deux pompes hydrauliques, et d'un moteur d'entraînement commun à ces deux pompes.

S'agissant ici d'une machine de foration, le châssis 2 du véhicule porteur, précédemment décrit, porte d'une part à l'avant un premier bras de foration 25, et porte d'autre part à l'arrière un second bras de foration 26. Le bras de foration avant 25 comporte en particulier une glissière de foration 27, le long de laquelle se déplace une perforatrice 28, la position de base de la glissière 27 étant horizontale et orientée perpendiculairement au sens longitudinal de déplacement (flèche F) du véhicule porteur, roulant sur le sol 8 par ses quatre roues 3 à 6. De manière similaire, le bras de foration arrière 26 comporte en particulier une glissière de foration 29, le long de laquelle se déplace une perforatrice 30, la position de base de la glissière 29 étant horizontale et orientée perpendiculairement au sens longitudinal de déplacement (flèche F) du véhicule porteur.

Les bras de foration avant 25 et arrière 26 peuvent, à partir de leur position de base, décrire divers mouvements actionnés par des moteurs ou vérins hydrauliques, ici non détaillés, pour positionner les glissières de foration 27 et 29. Les fonctions hydrauliques des deux bras de foration 25 et 26 sont alimentées par l'intermédiaire d'un premier bloc de régulation 31, pour le bras de foration avant 25 et sa perforatrice 28, et d'un second bloc de régulation 32, pour l'autre bras de foration 26 et sa perforatrice 30.

L'ensemble formé par le véhicule porteur et par ses équipements de foration 25 à 30 comprend encore des composants électriques de puissance et de commande, incluant :
- une armoire électrique de puissance 33, placée sur un côté du châssis 2 ;
- une radiocommande 34 pour la commande des déplacements au sol du véhicule porteur ;
- un boîtier électrique de relayage 35, pour chaque bras de foration 25 ou 26 ;
- un boîtier de télécommande 36, avec câble 37, ou avec radiocommande, pour le premier bras de foration 25 ;
- un autre boîtier de télécommande 38, avec câble 39, ou avec radiocommande, pour le second bras de foration 26.

Dans l'ensemble, la machine ainsi constituée est très compacte, et notamment de faible hauteur h, inférieure à un mètre, ce qui permet son utilisation dans une galerie de mine 40 dont la hauteur H est elle-même limitée et se situe par exemple entre 1 mètre et 1,5 mètre, comme l'illustre la figure 1. A l'intérieur de cette galerie de mine 40, le véhicule porteur se déplace au sol 8, entraîné par ses quatre roues motrices 3 à 6 dont les suspensions indépendantes 9 à vérins 15 permettent une adaptation aux dénivellations et irrégularités du sol 8, avec une "gestion" de hauteur indépendante pour chaque roue 3 à 6, la garde au sol G étant réglable pour chaque roue par exemple entre 15 cm et 30 cm. En utilisant la radiocommande 34, l'opérateur commande la translation du véhicule porteur, selon la flèche F, et ses changements de direction, obtenus par un actionnement différent des deux roues motrices droites 3 et 4 d'une part, et des deux roues motrices gauches 5 et 6 d'autre part, le véhicule porteur étant ainsi dirigé par "ripage". Le véhicule porteur est notamment déplacé parallèlement à la face de foration, vers laquelle sont dirigés les deux bras de foration 25 et 26 avec leurs perforatrices respectives 28 et 30, les deux boîtiers de télécommande 36 et 38 permettant une conduite séparée de chaque bras de foration 25 ou 26.

L'on ne s'éloignerait pas du cadre de l'invention, telle que définie dans les revendications annexées :
- en modifiant l'agencement des divers organes hydrauliques et électriques logés dans le châssis du véhicule porteur ;
- en montant sur ce châssis tous genres d'équipements de travail, qui peuvent être non seulement de foration mais aussi des équipements de boulonnage ou autres ;
- en prévoyant tous genre de commandes, notamment de télécommandes, pour les fonctions du véhicule porteur et/ou de ses équipements.

## Revendications

1. Véhicule porteur pour machine de foration ou de boulonnage, lequel véhicule comporte un châssis rigide (2) et quatre roues (3, 4, 5, 6) toutes motrices, soit deux roues motrices (3, 4) situées du côté droit du châssis (2) du véhicule et deux autres roues motrices (5, 6) situées du côté gauche de ce châssis (2), les quatre roues motrices (3 à 6) étant à suspension indépendante (9), et comportant chacune des moyens motorisés (19, 20) d'entraînement en rotation, **caractérisé en ce que** la suspension indépendante (9) de chacune des quatre roues motrices (3 à 6) est une suspension à hauteur commandée indépendamment par des moyens moteurs, à savoir une suspension du type parallélogramme déformable (10 à 14), animée par un vérin hydraulique (15) permettant un réglage de la garde au sol (G) pour chaque roue motrice (3 à 6), ledit châssis (2) recevant, à l'avant et/ou à l'arrière, des équipements de travail (25, 26), notamment des équipements de foration ou de boulonnage.

2. Véhicule porteur selon la revendication 1, **caractérisé en ce que** les quatre roues motrices (3 à 6) sont des roues non orientables, et **en ce que** leurs moyens motorisés d'entraînement en rotation comprennent, pour les deux roues (3, 4) situées du côté droit du châssis (2), des moteurs hydrauliques respectifs (19) alimentés par une première pompe ou un premier groupe motopompe (22) et, pour les deux roues (5, 6) situées du côté gauche du châssis (2), des moteurs hydrauliques respectifs (20) alimentés, indépendamment des précédents, par une seconde pompe ou un second groupe motopompe (23).

3. Véhicule porteur selon la revendication 2, **caractérisé en ce que** les deux groupes motopompes (22, 23) sont des groupes motopompes électriques.

4. Véhicule porteur selon l'une quelconque des revendications 1 à 3, **caractérisé en ce que** son châssis (2) renferme un réservoir hydraulique (21), commun à l'ensemble des organes et équipements hydrauliques de déplacement et de travail de la machine de foration ou de boulonnage.

5. Véhicule porteur selon l'une quelconque des revendications 1 à 4, **caractérisé en ce que** la face supérieure (7) de son châssis (2) est située à une faible hauteur (h), inférieure à un mètre, au-dessus du sol (8) sur lequel le véhicule porteur se déplace, par ses roues (3 à 6).

6. Véhicule porteur selon l'une quelconque des revendications 1 à 5, **caractérisé en ce qu'**il est appliqué à la constitution d'une machine de foration, le châssis (2) portant, à l'avant et à l'arrière, respectivement un bras de foration avant (25) et un bras de foration arrière (26), chacun avec une glissière de foration (27, 29) dont la position de base est horizontale et orientée perpendiculairement au sens longitudinal de déplacement (F) du véhicule porteur sur ses roues (3 à 6).

7. Véhicule porteur selon l'une quelconque des revendications 1 à 6, **caractérisé en ce qu'**il est pourvu de télécommandes et notamment de radiocommandes (34), ou de télécommandes à câble (36, 38), d'une part pour les mouvements au sol de la partie "véhicule porteur", et d'autre part pour les positionnements et mouvements des deux bras de foration (25, 26), respectivement avant et arrière, ou d'autres équipements de travail.

## Claims

1. Carrier vehicle for a drilling or rockbolting machine, said vehicle comprising a rigid chassis (2) and four wheels (3, 4, 5, 6), all driving wheels, i.e. two driving wheels (3, 4) situated on the right-hand side of the chassis (2) of the vehicle and two other driving wheels (5, 6) situated on the left-hand side of this chassis (2), the four driving wheels (3 to 6) being of the independent suspension (9) type, and each comprising motorized rotation-drive means (19, 20), **characterized in that** the independent suspension (9) of each of the four driving wheels (3 to 6) is a suspension having a height independently controlled by driving means, namely a deformable-parallelogram-type suspension (10 to 14), actuated by a hydraulic jack (15) allowing adjustment of the ground clearance (G) for each driving wheel 3 to 6), the said chassis (2) receiving, at the front and/or at the rear, working equipment (25,26), especially drilling or rockbolting equipment.

2. Carrier vehicle according to claim 1, **characterized in that** the four driving wheels (3 to 6) are non-steerable wheels and **in that** their motorized rotation-drive means comprise, for the two wheels (3, 4) situated on the right-hand side of the chassis (2), respective hydraulic motors (19) fed by a first pump or a first motor-driven pump unit (22), and for the two wheels (5, 6) situated on the left-hand side of the chassis (2), respective hydraulic motors {20) fed, independently of the previous ones, by a second pump or a second motor-driven pump unit (23).

3. Carrier vehicle according to claim 2, **characterized in that** the two motor-driven pump units (22, 23) are electric motor-driven pump units.

4. Carrier vehicle according to any one of claims 1 to 3, **characterized in that** its chassis (2) contains a hydraulic reservoir (21), common to the whole of the hydraulic displacement and working members and equipment of the drilling or rockbolting machine.

5. Carrier vehicle according to any one of claims 1 to 4, **characterized in that** the top face (7) of its chassis (2) is situated at a low height (h), less than one metre, above the ground (8) over which the carrier vehicle moves via its wheels (3 to 6).

6. Carrier vehicle according to any one of claims 1 to 5, **characterized in that** it is applied to the structure of a drilling machine, the chassis (2) bearing, at the front and at the rear, a front drilling arm (25) and a rear drilling arm (26) respectively, each with a drilling guide (27, 29), the basic position of which is horizontal and orientated perpendicularly to the longitudinal direction of displacement (F) of the carrier vehicle on its wheels (3 to 6) .

7. Carrier vehicle according to any one of claims 1 to 6, **characterized in that** it is provided with telecontrols and especially radio controls (34), or with cable-transmitted telecontrols {36, 38), on the one hand, for ground movements of the "carrier vehicle" part and, on the other hand, for the positionings and movements of the two drilling arms {25, 26), front and rear respectively, or of other working equipment.

## Patentansprüche

1. Trägerfahrzeug für Bohr- oder Verbolzungsmaschinen, wobei dieses Fahrzeug ein starres Chassis (2) und vier Antriebsräder (3, 4, 5, 6) hat, und zwar zwei Antriebsräder (3, 4) auf der rechten Seite des Chassis (2) des Fahrzeugs und zwei weitere Antriebsräder (5, 6) auf der linken Seite dieses Chassis (2), wobei die vier Antriebsräder (3 bis 6) eine unabhängige Aufhängung (9) haben und jedes Rad Motormittel (19, 20) umfasst, um es in Drehung zu versetzen, **dadurch gekennzeichnet, dass** die unabhängige Aufhängung (9) jedes der vier Antriebsräder (3 bis 6) eine Aufhängung ist, deren Höhe von Antriebsmitteln unabhängig gesteuert wird, das heißt, eine Aufhängung des Typs verformbares Parallelogramm (10 bis 14), die von einem Hydraulikzylinder (15) bewegt wird, der ein Einstellen der Bodenfreiheit (G) jedes Antriebsrads (3 bis 6) erlaubt, wobei das Chassis (2), vorne oder hinten, Arbeitsausrüstungen (25, 26) aufnimmt, insbesondere Bohr- oder Verbolzungsmaschinen.

2. Trägerfahrzeug nach Anspruch 1, **dadurch gekennzeichnet, dass** die vier Antriebsräder (3 bis 6) nichtlenkbare Räder sind, und **dadurch**, dass ihre Motormittel, die sie in Drehung versetzen, bei den zwei Rädern (3, 4), die sich auf der rechten Seite des Chassis (2) befinden, jeweils Hydraulikmotoren (19) sind, die durch eine erste Pumpe oder einen ersten Motorpumpensatz (22) gespeist werden, und bei den zwei Rädern (5, 6), die sich auf der linken Seite des Chassis (2) befinden, jeweils Hydraulikmotoren (20), die unabhängig von den vorgenannten durch eine zweite Pumpe oder einen zweiten Motorpumpensatz (23) gespeist werden.

3. Trägerfahrzeug nach Anspruch 2, **dadurch gekennzeichnet, dass** die zwei Motorpumpensätze (22, 23) elektrische Motorpumpensätze sind.

4. Trägerfahrzeug nach einem der Ansprüche 1 bis 3, **dadurch gekennzeichnet, dass** sein Chassis (2) einen Hydrauliktank (21) umfasst, der der Gesamtheit der hydraulischen Organe und Geräte für die Bewegung und für die Arbeit der Bohr- oder Verbolzungsmaschinen gemeinsam ist.

5. Trägerfahrzeug nach einem der Ansprüche 1 bis 4, **dadurch gekennzeichnet, dass** die Oberseite (7) seines Chassis (2) sich in einer geringen Höhe (h), und zwar unter einem Meter, oberhalb des Bodens (8) befindet, auf dem sich das Trägerfahrzeug auf seinen Rädern (3 bis 6) bewegt.

6. Trägerfahrzeug nach einem der Ansprüche 1 bis 5, **dadurch gekennzeichnet, dass** es zum Aufbau einer Bohrmaschine dient, wobei das Chassis (2) vorne und hinten jeweils einen vorderen Bohrarm (25) und einen hinteren Bohrarm (26) trägt, jeder mit einer Bohr-Führungsschiene (27, 29), deren Basisposition waagrecht ist und senkrecht ausgerichtet ist zur Längsrichtung der Bewegung (F) des Trägerfahrzeugs auf seinen Rädern (3 bis 6).

7. Trägerfahrzeug nach einem der Ansprüche 1 bis 6, **dadurch gekennzeichnet, dass** es mit Fernsteuerungen, und zwar insbesondere mit Funkfernsteuerungen (34) oder Kabelfernsteuerungen (36, 38) ausgestattet ist, einerseits für die Bewegungen des Teils "Trägerfahrzeug" auf dem Boden und andererseits für die Positionierungen und Bewegungen der zwei Bohrarme (25, 26), des vorderen beziehungsweise des hinteren, oder auch anderer Arbeitsgeräte.
